(19) **Europäisches Patentamt / European Patent Office / Office européen des brevets**

(11) **EP 3 254 092 B1**

(12) **FASCICULE DE BREVET EUROPEEN**

(45) Date de publication et mention de la délivrance du brevet:
**07.04.2021 Bulletin 2021/14**

(51) Int Cl.:
*G01N 25/18* (2006.01)　　　*G01K 17/20* (2006.01)

(21) Numéro de dépôt: **16707874.0**

(86) Numéro de dépôt international:
**PCT/FR2016/050253**

(22) Date de dépôt: **05.02.2016**

(87) Numéro de publication internationale:
**WO 2016/124870 (11.08.2016 Gazette 2016/32)**

(54) **DETERMINATION DE LA RESISTANCE THERMIQUE D'UNE PAROI**

BESTIMMUNG DES WÄRMEWIDERSTANDS EINER WAND

DETERMINATION OF THE THERMAL RESISTANCE OF A WALL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2015 FR 1550970**

(43) Date de publication de la demande:
**13.12.2017 Bulletin 2017/50**

(73) Titulaire: **SAINT-GOBAIN ISOVER**
**92400 Courbevoie (FR)**

(72) Inventeurs:
• **ALZETTO, Florent**
**92300 Levallois Perret (FR)**
• **MEULEMANS, Johann**
**75012 Paris (FR)**
• **PANDRAUD, Guillaume**
**75011 Paris (FR)**

(74) Mandataire: **Saint-Gobain Recherche**
**B.P. 135**
**39, quai Lucien Lefranc**
**93303 Aubervilliers Cedex (FR)**

(56) Documents cités:
**WO-A1-2011/117356　　WO-A1-2012/028829**
**FR-A1- 2 528 172**

**Description**

La présente invention a trait à un procédé et un dispositif pour déterminer une grandeur représentative de la résistance thermique d'une paroi de séparation entre un premier milieu et un deuxième milieu.

L'invention peut être appliquée pour déterminer une grandeur représentative de la résistance thermique de tout type de paroi de séparation entre deux milieux, notamment une paroi d'un bâtiment, une paroi d'un véhicule, une paroi d'un four, une paroi d'une cuve.

En particulier, l'invention peut être appliquée pour déterminer une grandeur représentative de la résistance thermique d'un élément de construction appartenant à l'enveloppe d'un local, tel qu'un mur, un sol, un toit, une fenêtre, une porte, etc., l'élément de construction étant alors une paroi de séparation entre l'intérieur et l'extérieur du local.

On entend ici par "local" tout espace d'habitat ou de stockage. En particulier, il peut s'agir d'un espace d'habitat ou de stockage fixe, tel qu'une maison individuelle ou un bâtiment, notamment à usage d'habitation ou tertiaire, ou une partie d'un tel bâtiment, par exemple un appartement dans un immeuble à plusieurs étages, ou encore tel qu'une machine, notamment dans le domaine de l'électroménager, un four, un réfrigérateur, etc. Il peut également s'agir d'un espace d'habitat ou de stockage transportable, tel qu'un wagon de train, un habitacle de voiture, une cabine de camion ou un espace de stockage dans un camion, une cabine de navire ou un espace de stockage dans un navire.

Le document WO 2011/117356 A1 décrit une analyse du comportement thermique d'un local.

Dans le cadre de l'invention, l'expression "grandeur représentative de la résistance thermique d'une paroi" désigne toute grandeur caractérisant l'aptitude de la paroi à laisser passer un flux de chaleur. Dans le cadre du procédé et du dispositif selon l'invention, on peut notamment déterminer, en tant que grandeurs représentatives de la résistance thermique de la paroi :

- le coefficient de transmission thermique de la paroi, noté $U$ ;
- la résistance thermique totale de la paroi, notée $R_T$ ;
- la résistance thermique de surface à surface de la paroi, notée $R$.

Le coefficient de transmission thermique $U$ d'une paroi est défini comme le quotient du flux thermique par unité de surface, en régime stationnaire, par la différence de température entre les milieux situés de part et d'autre de la paroi. Le coefficient de transmission thermique $U$ est donné par la relation :

$$U = \frac{q}{(T_1 - T_2)},$$

où $q$ est la densité de flux thermique à travers la paroi, $T_1$ est la température dans le milieu situé d'un premier côté de la paroi, $T_2$ est la température dans le milieu situé du deuxième côté de la paroi.

$$R_T = \frac{1}{U} = R_{s1} + R + R_{s2}, \quad \text{où} \quad R = \frac{T_{s1} - T_{s2}}{q}$$

La résistance thermique totale $R_T$ de la paroi est telle que est la résistance thermique de surface à surface de la paroi, avec $T_{s1}$ la température de surface du premier côté de la paroi et $T_{s2}$ la température de surface du deuxième côté de la paroi, $R_{s1}$ est la résistance thermique superficielle du premier côté de la paroi, $R_{s2}$ est la résistance thermique superficielle du deuxième côté de la paroi.

La détermination du coefficient de transmission thermique $U$ des éléments de construction constitutifs de l'enveloppe d'un local est utile, notamment, pour effectuer un diagnostic de l'isolation thermique du local, qu'il s'agisse d'un local neuf ou ancien. En particulier, lorsqu'on envisage une réhabilitation du local, elle permet de cibler les mesures qu'il convient de prendre pour améliorer la performance thermique.

Il est connu de déterminer le coefficient de transmission thermique $U$ d'un élément de construction appartenant à l'enveloppe d'un local selon une méthode quasi-statique définie par la norme ISO 9869:1994, dite "méthode du fluxmètre". Cette méthode met en jeu des mesures in situ, d'une part, du flux thermique à travers l'élément de construction à l'aide d'au moins un fluxmètre monté sur une face de l'élément adjacente à la température la plus stable et, d'autre part, de la température à l'intérieur du local et de la température à l'extérieur du local au voisinage du fluxmètre. Les mesures de flux thermique et de températures sont réalisées pendant une période de temps pouvant aller de trois jours minimum à plusieurs semaines, la durée de mesure dépendant, notamment, de la nature de l'élément de construction, des fluctuations des températures intérieure et extérieure, de la méthode utilisée pour l'analyse des données. Un inconvénient majeur de cette méthode est sa durée de mise en œuvre.

C'est à ces inconvénients qu'entend plus particulièrement remédier l'invention en proposant un procédé et un dispositif permettant de déterminer de manière rapide une grandeur représentative de la résistance thermique d'une paroi de séparation entre un premier milieu et un deuxième milieu, notamment sur une période d'une seule nuit ou même de quelques heures, quel que soit le type de paroi, avec un coût modéré et une précision raisonnable, la paroi pouvant par exemple être un élément de construction appartenant à l'enveloppe d'un local.

A cet effet, l'invention a pour objet un procédé de détermination d'une grandeur représentative de la résistance thermique d'une paroi de séparation entre un premier milieu et un deuxième milieu, caractérisé en ce qu'il comprend des étapes dans lesquelles :

- sur au moins deux périodes de temps $D_k$ successives correspondant à des puissances $P_k$ distinctes de chauffe du premier milieu, on procède à une campagne de mesures du flux thermique à travers la paroi $q_k$ et de la température dans le premier milieu $T_{1k}$ à intervalles de temps rapprochés, ainsi qu'à la détermination de la température dans le deuxième milieu $T_{2k}$ à intervalles de temps rapprochés ;
- on détermine la valeur de la grandeur représentative de la résistance thermique de la paroi en faisant converger : d'une part, un modèle thermique exprimant la variation temporelle de la température dans un milieu séparé d'un autre milieu par une paroi, en fonction du flux thermique à travers la paroi, de la température dans l'autre milieu et de paramètres physiques de la paroi à partir desquels la grandeur représentative de la résistance thermique de la paroi est calculable ; et, d'autre part, l'évolution mesurée $T_{1k}(t)$ de la température dans le premier milieu en fonction du temps.

Au sens de l'invention, le fait de faire converger le modèle thermique et l'évolution mesurée $T_{1k}(t)$ signifie que l'on ajuste la valeur de paramètres physiques de la paroi utilisés dans le modèle thermique de manière à minimiser l'écart, au moins sur un intervalle de temps compris dans chaque période de temps $D_k$, entre l'évolution temporelle de la température dans le premier milieu calculée à partir du modèle thermique et l'évolution temporelle de la température dans le premier milieu effectivement mesurée $T_{1k}(t)$. L'ajustement peut ainsi se faire sur toute l'étendue de chaque période de temps $D_k$, ou sur un ou plusieurs intervalles de temps compris dans chaque période de temps $D_k$.

A titre d'exemple, dans le cas où le modèle thermique est un modèle R-C simple avec une résistance et une capacité et où, pour chaque période de temps $D_k$, il existe un intervalle de temps $\Delta t_k$ pour lequel l'évolution mesurée $T_{1k}(t)$ de la température dans le premier milieu en fonction du temps est sensiblement linéaire, on fait converger le modèle R-C simple et l'évolution mesurée $T_{1k}(t)$ sur les intervalles de temps $\Delta t_k$ de la manière suivante : pour chaque période de temps $D_k$ on détermine sur l'intervalle de temps $\Delta t_k$ la pente $a_k$ de la tangente à la courbe $T_{1k}(t)$, et on détermine la valeur de la grandeur représentative de la résistance thermique de la paroi à partir des valeurs de pente $a_k$ et des valeurs de flux thermique moyen à travers la paroi $q_{km}$ pris sur la période de temps $D_k$ ou, de préférence, pris sur l'intervalle de temps $\Delta t_k$.

Selon un autre exemple, dans le cas où le modèle thermique est un modèle R-C plus complexe, tel qu'un modèle dit « 2R2C » avec deux résistances et deux capacités, ou encore un modèle dit « 3R2C » avec trois résistances et deux capacités, on fait converger le modèle R-C plus complexe et l'évolution mesurée $T_{1k}(t)$ en ajustant la valeur des paramètres physiques de la paroi utilisés dans le modèle de manière à minimiser l'écart, sur l'ensemble des périodes de temps $D_k$, entre l'évolution temporelle de la température dans le premier milieu calculée à partir du modèle R-C plus complexe et l'évolution temporelle de la température dans le premier milieu effectivement mesurée $T_{1k}(t)$.

En pratique, des données d'entrée sont injectées dans le modèle thermique, telles que les dimensions de la paroi, le flux thermique à travers la paroi $q_k$ mesuré sur chaque période de temps $D_k$, la température dans le deuxième milieu $T_{2k}$ déterminée sur chaque période de temps $D_k$.

Des exemples de paramètres physiques de la paroi susceptibles d'intervenir dans le modèle thermique et d'être ajustés de manière à faire converger le modèle thermique et l'évolution mesurée $T_{1k}(t)$ comprennent, notamment, la conductivité thermique de la paroi, la capacité thermique de la paroi, l'épaisseur de la paroi, le coefficient d'échange convecto-radiatif $h_i$ entre la paroi et le premier milieu.

L'invention permet une détermination in situ de la résistance thermique de la paroi. Le principe à la base de l'invention est d'utiliser les variations transitoires de la température dans le premier milieu lorsque le premier milieu est soumis à des sollicitations internes contrôlées et dans un environnement externe mesuré. L'analyse quantitative de la variation de la température dans le premier milieu permet de déterminer quantitativement la qualité énergétique de la paroi sur une période courte, s'étendant sur quelques heures, en limitant le nombre de paramètres susceptibles d'influencer le comportement thermique de la paroi et des premier et deuxième milieux. En particulier, dans le cas de la détermination de la résistance thermique d'un élément de construction appartenant à l'enveloppe d'un local, la brièveté des mesures permet de s'affranchir de l'influence des conditions d'utilisation du local et des variations des conditions climatiques extérieures.

De préférence, on analyse la variation de la température dans le premier milieu au voisinage de la paroi dont on souhaite déterminer une grandeur représentative de la résistance thermique.

Dans le cadre de l'invention, on entend par "puissance de chauffe du premier milieu" toute condition opératoire générant une variation de la température dans le premier milieu, pour des conditions de température données dans le deuxième milieu. Il est entendu que la puissance de chauffe peut être positive, nulle ou négative. Une puissance de chauffe positive correspond à un apport de chaleur dans le premier milieu, alors qu'une puissance de chauffe négative correspond à un apport de froid dans le premier milieu.

Les périodes de temps $D_k$ peuvent être soit disjointes, soit immédiatement successives les unes aux autres. Dans ce dernier cas, on peut considérer que le procédé est réalisé dans sa globalité sur une période de temps continue, formée par la succession des périodes de temps $D_k$.

De préférence, le procédé est mis en œuvre avec deux périodes de temps $D_1$ et $D_2$ successives correspondant à deux consignes de puissances $P_1$ et $P_2$ distinctes de chauffe du premier milieu.

De manière avantageuse, en vue de limiter le temps de mise en œuvre du procédé tout en réduisant la contribution du rayonnement solaire, le procédé est réalisé dans sa globalité en continu sur une seule période nocturne.

Selon un aspect de l'invention, les mesures du flux thermique à travers la paroi $q_k$ sont effectuées à l'aide d'au moins un capteur de flux thermique positionné sur une face de la paroi. Le capteur de flux thermique peut être un fluxmètre ou un calorimètre.

De manière avantageuse, le capteur de flux thermique est un fluxmètre compatible avec la norme ISO 9869:1994, notamment un fluxmètre à gradient.

Selon un aspect de l'invention, la résistance au flux due au fluxmètre est prise en compte et une correction est appliquée au flux thermique mesuré, de manière à obtenir le flux thermique concernant uniquement la paroi dont on souhaite déterminer la résistance thermique. Cela est particulièrement important pour des parois à faible résistance thermique, telles que des simples vitrages.

De manière avantageuse, les mesures de la température dans le premier milieu $T_{1k}$ sont effectuées à l'aide d'au moins un capteur de température qui est positionné dans le premier milieu au voisinage du capteur de flux thermique. De préférence, le positionnement du ou des capteurs de température dans le premier milieu est réalisé conformément au paragraphe 6.1.3 de la norme ISO 9869:1994.

Selon un aspect de l'invention, les mesures de la température dans le premier milieu $T_{1k}$ sont effectuées à l'aide d'au moins un capteur de température ambiante apte à mesurer la température de l'air dans le premier milieu. Il est alors possible d'accéder directement au coefficient de transmission thermique U de la paroi ou à la résistance thermique totale $R_T$ de la paroi. Des exemples de capteurs de température ambiante utilisables dans le cadre de l'invention comprennent, notamment, des thermocouples, par exemple des thermocouples de type K ou de type T ; des thermomètres à résistance, par exemple des sondes Pt100. De tels capteurs de température ambiante sont positionnés dans le volume d'air dans le premier milieu.

Selon un aspect de l'invention, les mesures de la température dans le premier milieu $T_{1k}$ sont effectuées à l'aide d'au moins un capteur de température de surface apte à mesurer la température de surface de la paroi dans le premier milieu. Il est alors possible d'accéder directement à la résistance thermique de surface à surface $R$ de la paroi. Des exemples de capteurs de température de surface utilisables dans le cadre de l'invention comprennent, notamment, des thermocouples fins ou des thermomètres à résistance plats, qui sont positionnés sur la surface de la paroi dans le premier milieu ; des caméras infrarouges, qui sont positionnées en regard de la surface de la paroi dans le premier milieu.

Le modèle thermique utilisé pour déterminer la valeur de la grandeur représentative de la résistance thermique de la paroi peut être de tout type connu de l'homme du métier. Il peut s'agir, notamment, d'un modèle R-C avec un nombre adapté de résistances et de capacités.

De préférence, le modèle thermique utilisé pour déterminer la valeur de la grandeur représentative de la résistance thermique de la paroi est un modèle R-C simple avec une résistance et une capacité.

Selon une variante, le modèle thermique utilisé pour déterminer la valeur de la grandeur représentative de la résistance thermique de la paroi peut être un modèle R-C dit « 2R2C » avec deux résistances et deux capacités, ou encore un modèle R-C dit « 3R2C » avec trois résistances et deux capacités.

Dans un mode de réalisation avantageux, le modèle thermique utilisé pour déterminer la valeur de la grandeur représentative de la résistance thermique de la paroi est un modèle R-C simple avec une résistance et une capacité et, pour chaque période de temps $D_k$, il existe un intervalle de temps $\Delta t_k$ pour lequel l'évolution mesurée $T_{1k}(t)$ de la température dans le premier milieu en fonction du temps est sensiblement linéaire. On fait alors converger le modèle R-C et l'évolution mesurée $T_{1k}(t)$ de la manière suivante : pour chaque période de temps $D_k$ on détermine sur l'intervalle de temps $\Delta t_k$ la pente $a_k$ de la tangente à la courbe $T_{1k}(t)$, puis on détermine la valeur de la grandeur représentative de la résistance thermique de la paroi à partir des valeurs de pente $a_k$ et des valeurs de flux thermique moyen à travers la paroi $q_{km}$ pris sur la période de temps $D_k$ ou, de préférence, pris sur l'intervalle de temps $\Delta t_k$.

Bien entendu, le procédé selon l'invention ne requiert pas nécessairement la mise en place d'une représentation graphique de l'évolution $T_{1k}(t)$.

En particulier, sur chaque intervalle de temps $\Delta t_k$, la pente $a_k$ de la tangente à la courbe $T_{1k}(t)$ est égale à la dérivée de l'évolution $T_{1k}(t)$ sur l'intervalle $\Delta t_k$. Dès lors, l'étape de détermination de la pente $a_k$ de la tangente à la courbe $T_{1k}(t)$ sur l'intervalle de temps $\Delta t_k$ peut être réalisée, dans le cadre de l'invention, en calculant la dérivée de l'évolution $T_{1k}(t)$ sur l'intervalle de temps $\Delta t_k$, sans recourir à une représentation graphique de l'évolution $T_{1k}(t)$.

Les étapes de calcul du procédé, en particulier pour la détermination des pentes $a_k$, peuvent être mises en œuvre à l'aide de tout moyen de calcul approprié. Il peut s'agir notamment d'une unité de calcul électronique qui est reliée à un système d'acquisition pour acquérir les mesures requises par le procédé et qui comporte des moyens de calcul pour exécuter tout ou partie des étapes de calcul du procédé à partir des mesures acquises.

Dans le cadre de l'invention, selon le principe expliqué dans la demande de brevet WO 2012/028829 A1, on utilise un modèle R-C simple pour décrire un local, avec deux nœuds de température homogène, l'un à l'intérieur du local et l'autre à l'extérieur du local, qui sont séparés par une résistance représentant le coefficient de déperdition thermique global $K$ du local et décrivant la perte par transmission et infiltration à travers l'enveloppe du local. Le nœud de température à l'intérieur du local est relié à un condensateur qui représente la masse thermique ou capacité thermique effective $C$ du local. La puissance injectée dans le local est compensée par la perte de chaleur à travers l'enveloppe et la chaleur emmagasinée dans la structure de l'enveloppe, ce qui est décrit par l'équation :

$$P = K(T_1 - T_2) + C \frac{dT_1}{dt},$$

où $P$ est la puissance totale injectée dans le local, $T_1$ et $T_2$ sont respectivement la température à l'intérieur du local et la température extérieure, $K$ est le coefficient de déperdition thermique global du local et $C$ est la capacité thermique effective du local.

On suppose que la réponse en température du local est une simple exponentielle décroissante et que sa constante de temps est le produit du coefficient de déperdition thermique global $K$ et de la capacité thermique effective $C$ du local. En réalité, la réponse thermique du local est plus complexe et est la superposition d'un grand nombre d'exponentielles décroissantes, mais en effectuant un test sur une durée assez longue, seule la constante de temps la plus grande joue un rôle et le modèle décrit précédemment est valide.

En appliquant deux puissances $P_1$ et $P_2$ de chauffe du local de valeurs différentes sur deux périodes de temps $D_1$ et $D_2$, il est alors possible de déterminer le coefficient de déperdition thermique global $K$ du local selon la formule :

$$K = \frac{a_1 P_2 - a_2 P_1}{a_1 \Delta T_{2m} - a_2 \Delta T_{1m}},$$

où $(a_k)_{k=1\ ou\ 2}$ est la pente sur l'intervalle de temps $\Delta t_k$ de la tangente à la courbe d'évolution de la température à l'intérieur du local $T_{1k}(t)$, et $(\Delta T_{km})_{k=1\ ou\ 2}$ est la différence entre la température moyenne à l'intérieur du local et la température moyenne à l'extérieur du local sur l'intervalle de temps $\Delta t_k$.

Selon la présente invention, par analogie, il est possible de déterminer le coefficient de transmission thermique $U$ d'une paroi de séparation entre un premier milieu et un deuxième milieu selon la formule :

$$U = \frac{a_1 q_2 - a_2 q_1}{a_1 \Delta T_{2m} - a_2 \Delta T_{1m}},$$

où $(a_k)_{k=1\ ou\ 2}$ est la pente sur l'intervalle de temps $\Delta t_k$ de la tangente à la courbe d'évolution de la température dans le premier milieu $T_{1k}(t)$, $(\Delta T_{km})_{k=1\ ou\ 2}$ est la différence entre la température moyenne dans le premier milieu et la température moyenne dans le deuxième milieu sur l'intervalle de temps $\Delta t_k$, et $(q_k)_{k=1\ ou\ 2}$ est le flux thermique moyen à travers la paroi pris sur la période de temps $D_k$ ou, de préférence et pour plus de précision, pris sur l'intervalle de temps $\Delta t_k$.

Selon un mode de réalisation, le procédé comprend des étapes dans lesquelles :

- on procède, sur deux périodes de temps $D_1$ et $D_2$ successives :

    i. sur la première période de temps $D_1$, à l'application d'une première puissance de chauffe $P_1$ du premier milieu, et à une campagne de mesures du flux thermique à travers la paroi $q_1$ et de la température dans le premier milieu $T_{11}$ à intervalles de temps rapprochés, ainsi qu'à la détermination de la température dans le deuxième milieu $T_{21}$ à intervalles de temps rapprochés, la première puissance de chauffe $P_1$ étant telle que le paramètre

$$\alpha = 1 - \frac{\Delta T_1(0) K_{ref}}{P_1}$$

est inférieur ou égal à 0,8, avec $\Delta T_1(0) = T_{11}(t=0) - T_{2m}$, où $t = 0$ est le point de départ de la première période de temps $D_1$, $T_{2m}$ est la température moyenne dans le deuxième milieu sur l'ensemble des périodes de temps $D_1$ et $D_2$, et $K_{ref}$ est une valeur de référence du coefficient de déperdition thermique K du premier milieu, puis

ii. sur la deuxième période de temps $D_2$, à l'application d'une deuxième puissance de chauffe $P_2$ du premier milieu sensiblement nulle, et à une campagne de mesures du flux thermique à travers la paroi $q_2$ et de la température dans le premier milieu $T_{12}$ à intervalles de temps rapprochés, ainsi qu'à la détermination de la température dans le deuxième milieu $T_{22}$ à intervalles de temps rapprochés ;

- on détermine la valeur de la grandeur représentative de la résistance thermique de la paroi en faisant converger : d'une part, un modèle thermique exprimant la variation temporelle de la température dans un milieu séparé d'un autre milieu par une paroi, en fonction du flux thermique à travers la paroi, de la température dans l'autre milieu et de paramètres physiques de la paroi à partir desquels la grandeur représentative de la résistance thermique de la paroi est calculable ; et, d'autre part, l'évolution mesurée $T_{1k}(t)$ de la température dans le premier milieu en fonction du temps.

Dans ce mode de réalisation, on sélectionne une sollicitation thermique spécifique du premier milieu, qui permet d'accéder à la valeur de la grandeur représentative de la résistance thermique de la paroi avec une bonne précision et sur un temps réduit, cette sollicitation thermique spécifique étant l'application d'une première puissance de chauffe $P_1$ strictement positive ou strictement négative propre à générer une évolution forcée de la température dans le premier milieu, suivie de l'application d'une deuxième puissance de chauffe $P_2$ sensiblement nulle autorisant une évolution libre de la température dans le premier milieu.

De préférence, la première puissance de chauffe $P_1$ est telle que le paramètre $$\alpha = 1 - \frac{\Delta T_1(0) K_{ref}}{P_1}$$ est supérieur ou égal à 0,25, encore de préférence supérieur ou égal à 0,3. En effet, pour des milieux bien isolés, lorsque le paramètre $\alpha$ est inférieur à 0,25 ou 0,3, la sensibilité des capteurs de mesure classiques ne permet pas d'obtenir des données satisfaisantes concernant l'évolution de la température dans le premier milieu $T_{11}$, sur la première période de temps $D_1$, d'où une augmentation de l'incertitude sur la valeur des coefficients $U$, $R$ ou $K$ déterminés selon l'invention.

La détermination de la valeur de la première puissance de chauffe $P_1$ à appliquer sur la première période de temps $D_1$ pour satisfaire aux critères sur le paramètre $\alpha$ impose de connaître une valeur de référence $K_{ref}$ du coefficient de déperdition thermique $K$ du premier milieu.

Une première méthode pour accéder à une valeur de référence $K_{ref}$ du coefficient de déperdition thermique $K$ du premier milieu est l'utilisation d'une grandeur issue d'une analyse thermique du premier milieu. En particulier, lorsque le premier milieu est l'intérieur d'un local, la valeur de référence $K_{ref}$ du local peut être obtenue à partir du coefficient de transmission ou de transfert thermique de l'enveloppe du local. De préférence, on détermine le coefficient de transfert thermique $H$ de l'enveloppe du local en utilisant la norme ISO 13789:2007, « Performance thermique des bâtiments - Coefficients de transfert thermique par transmission et par renouvellement d'air - Méthode de calcul », puis on déduit la valeur de référence $K_{ref}$ du coefficient de déperdition thermique par la relation :

$$K_{ref} = H_T + H_V,$$

où $H_T$ est le coefficient de transfert thermique par transmission et $H_V$ est le coefficient de transfert thermique par ventilation. De préférence, le coefficient de transfert thermique de l'enveloppe du local est déterminé selon la norme ISO 13789:2007 en l'absence de ventilation dans le local. En variante, la ventilation peut être active dans le local, le débit de ventilation devant alors être mesuré ou estimé.

L'utilisation de la norme ISO 13789:2007 est une méthode préférée pour accéder à une valeur de référence $K_{ref}$ du coefficient de déperdition thermique $K$. Toutefois, d'autres méthodes sont également envisageables, notamment lorsqu'on ne dispose pas de toutes les informations nécessaires pour appliquer la norme ISO 13789:2007.

Une deuxième méthode pour accéder à une valeur de référence $K_{ref}$ du coefficient de déperdition thermique $K$ du premier milieu lorsqu'il s'agit de l'intérieur d'un local est de soumettre le local à un test quasi-statique, tel qu'un test de "coheating".

Le "coheating" est une méthode quasi-statique dont l'objectif est de mesurer la perte thermique totale d'un local non occupé. Un test de "coheating" met en jeu un chauffage du local pendant plusieurs jours, généralement pendant une à trois semaines, à une température constante et homogène, grâce à des radiateurs électriques couplés à des ventilateurs et reliés à un système de régulation. La température de consigne doit être assez élevée, de l'ordre de 25°C, de manière à avoir une différence de température entre l'intérieur du local et l'extérieur d'au moins 10°C. Lorsque la saturation est atteinte, c'est-à-dire lorsqu'un état quasi-statique est atteint, on mesure la puissance P nécessaire pour maintenir le local à une température de 25°C, la température intérieure $T_{int}$ et la température extérieure $T_{ext}$. La température intérieure $T_{int}$ peut notamment être mesurée à l'aide de thermocouples ou thermistances, tandis que la température extérieure $T_{ext}$ peut être mesurée grâce à une station météorologique. Le traitement des données permet alors d'obtenir une valeur $K_{ref}$ du coefficient de déperdition thermique.

Plus précisément, la procédure est la suivante :
Tout d'abord, un premier test de pressurisation a lieu, qui permet de mesurer les pertes dues à la ventilation et aux infiltrations.

Ensuite, les ouvertures telles que les cheminées ou les bouches d'aération sont fermées, de sorte que les pertes liées à la ventilation ne sont plus accessibles à la mesure.

Le local est alors chauffé électriquement et de façon homogène, jusqu'à ce qu'une température de consigne élevée, de l'ordre de 25°C, soit atteinte.

On mesure alors la puissance P, la température intérieure $T_{int}$ et la température extérieure $T_{ext}$. Le traitement de ces mesures donne accès aux pertes par transmission et par infiltration.

Enfin, on réalise un deuxième test de pressurisation, de façon à connaître les pertes thermiques dues aux infiltrations uniquement, les ouvertures du local étant maintenues fermées.

Pour le traitement des mesures, on réalise chaque jour, sur vingt-quatre heures, la moyenne de la puissance nécessaire pour maintenir le local à la température de consigne et la moyenne de la différence de température entre l'intérieur et l'extérieur. Ces données moyennées sont alors reportées sur un graphique donnant la puissance en fonction de la différence de température. Une correction, due au rayonnement solaire qui participe aussi au chauffage du local, est à apporter. La pente de la droite qui passe par l'origine est donnée par régression linéaire, elle correspond au coefficient de déperdition thermique $K_{ref}$.

Cette méthode de "coheating" est relativement simple à mettre en œuvre et fournit directement une valeur de référence $K_{ref}$ du coefficient de déperdition thermique $K$ du local. Selon une variante avantageuse, pour des locaux à très faible inertie thermique, on peut réaliser des tests de "coheating" la nuit, la correction due aux apports solaires n'étant alors pas à faire.

Une troisième méthode pour accéder à une valeur de référence $K_{ref}$ du coefficient de déperdition thermique $K$ du premier milieu lorsqu'il s'agit de l'intérieur d'un local est l'utilisation d'une grandeur issue d'une étude de la consommation énergétique du local. En particulier, la valeur de référence $K_{ref}$ peut être déterminée comme étant le rapport de l'énergie consommée par le local sur une période de temps donnée sur le produit de la durée de la période de temps donnée et de la différence de température moyenne entre l'intérieur et l'extérieur du local sur la période de temps donnée.

Lorsque le modèle thermique utilisé pour déterminer la valeur de la grandeur représentative de la résistance thermique de la paroi est un modèle R-C avec une résistance et une capacité, pour chacune des première et deuxième périodes de temps $D_1$ et $D_2$, on sélectionne un intervalle de temps $\Delta t_1$ ou $\Delta t_2$ pour lequel l'évolution $T_{11}(t)$ ou $T_{12}(t)$ est sensiblement linéaire, où les intervalles de temps $\Delta t_1$ et $\Delta t_2$ sont tels que l'intervalle de temps $\Delta t_1$ s'étend jusqu'à la fin de la première période $D_1$ d'application de la première puissance de chauffe $P_1$ et tels que, lorsqu'on superpose les points de départ de la première période $D_1$ et de la deuxième période $D_2$, les intervalles de temps $\Delta t_1$ et $\Delta t_2$ ont le même point de fin ; on détermine, sur chaque intervalle de temps $\Delta t_1$ ou $\Delta t_2$ la pente $a_1$ ou $a_2$ de la tangente à la courbe $(T_{1k}(t))_{k = 1\ ou\ 2}$ ; et on déduit la valeur de la grandeur représentative de la résistance thermique de la paroi à partir des valeurs de pente $a_1$ $a_2$ et des valeurs de flux thermique moyen à travers la paroi $q_{1m}$, $q_{2m}$ - Chaque valeur de flux thermique moyen à travers la paroi $q_{km}$ peut être prise sur la période de temps $D_k$ correspondante ou, de préférence et pour plus de précision, prise sur l'intervalle de temps $\Delta t_k$ correspondant.

De préférence, les intervalles de temps $\Delta t_1$ et $\Delta t_2$ ont la même durée.

De manière avantageuse, pour chaque période de temps $D_k$, la puissance $P_k$ de chauffe du premier milieu comprend une puissance de chauffe $P_{impk}$ imposée au moyen d'une source de puissance contrôlée.

La source de puissance contrôlée pour le chauffage du premier milieu peut être un équipement fixe du premier milieu, c'est-à-dire un moyen de chauffage installé dans le premier milieu indépendamment de la mise en œuvre du procédé, sous réserve que ce moyen de chauffage soit peu inerte et ajustable de manière à assurer un chauffage rapide du premier milieu. Il peut notamment s'agir d'une pompe à chaleur dont le coefficient de performance (COP) est connu.

En variante, la source de puissance contrôlée pour le chauffage du premier milieu peut être une source rapportée dans le premier milieu spécifiquement pour la mise en œuvre du procédé.

Selon une autre variante, le chauffage du premier milieu sur chaque période de temps $D_k$ peut être mis en œuvre à l'aide d'une combinaison d'au moins un élément de chauffage qui équipe le premier milieu de manière fixe, indépendamment de la mise en œuvre du procédé, et d'au moins un élément de chauffage rapporté dans le premier milieu spécifiquement pour la mise en œuvre du procédé.

Les éléments de chauffage du premier milieu peuvent être de type convectif, conductif ou radiatif, ou combiner plusieurs de ces technologies. De préférence, les éléments de chauffage sont des appareils électriques, ce qui permet de déterminer la puissance de chauffe de manière directe et précise. Des exemples d'appareils de chauffage électriques comprennent notamment des appareils de type convectif mettant en jeu le soufflage d'air chauffé au moyen de résistances électriques ; des tapis ou des films chauffants ; des parasols radiants. En variante, les éléments de chauffage peuvent être des appareils fonctionnant au gaz ou au fioul, pour autant que les rendements des brûleurs et les débits de combustible puissent être estimés de manière suffisamment précise pour accéder à la puissance de chauffe.

Dans un mode de réalisation avantageux, les éléments de chauffage du premier milieu sont des tapis chauffants électriques, que l'on répartit dans le premier milieu en les positionnant verticalement et enroulés sur eux-mêmes, de sorte que toute la puissance thermique est dissipée dans l'air dans le premier milieu. Cet agencement permet un chauffage rapide et homogène du premier milieu, assurant que la température ambiante est suffisamment proche de la température de surface de la paroi du côté du premier milieu. Selon une variante, les éléments de chauffage du premier milieu sont des petits convecteurs électriques répartis dans le premier milieu.

Si le procédé de l'invention est mis en œuvre avec un premier milieu comportant des cloisons internes qui délimitent plusieurs pièces ou zones du premier milieu, on peut mesurer la température dans plusieurs pièces ou zones du premier milieu et considérer que la température dans le premier milieu à chaque temps t est la moyenne des mesures de température obtenues au temps t dans les différentes pièces ou zones du premier milieu pondérées chacune par le volume de la pièce ou zone.

Selon un aspect de l'invention, la puissance de chauffe délivrée dans le premier milieu est mesurée à l'aide d'au moins un capteur de puissance. Le ou chaque capteur de puissance peut être un capteur de tension (voltmètre) et/ou un capteur de courant (ampèremètre). De préférence, le ou chaque capteur de puissance est un wattmètre, muni à la fois d'un capteur de tension et d'un capteur de courant. Cela permet une mesure précise de la puissance dans le premier milieu, en s'affranchissant d'éventuelles fluctuations de la tension de secteur ou de la détermination de la résistance du ou de chaque élément de chauffage.

Selon un aspect de l'invention, le procédé est mis en œuvre pour déterminer, sur la base d'une même sollicitation thermique du premier milieu, le coefficient de transmission thermique $U$ de plusieurs éléments de construction appartenant à l'enveloppe d'un même local, où chaque élément de construction est une paroi de séparation entre un premier milieu qui est l'intérieur du local et un deuxième milieu qui est l'extérieur du local. De manière avantageuse, les campagnes de mesures du flux thermique $q_k$ à travers les différents éléments de construction et de la température intérieure $T_{1k}$ sont alors faites sur les mêmes périodes de temps $D_k$ pour tous les éléments de construction de l'enveloppe, correspondant aux mêmes puissances $P_k$ distinctes de chauffe du local. On peut ainsi accéder aux coefficients de transmission thermique $U$ des différents éléments de construction constitutifs de l'enveloppe d'un local lors d'un même test. L'obtention des coefficients de transmission thermique $U$ des différents éléments de construction constitutifs de l'enveloppe d'un local est utile, notamment, pour effectuer un diagnostic de l'isolation thermique du local.

Selon un aspect avantageux, on détermine également le coefficient de déperdition thermique $K$ global du local. Cela permet d'accéder aux contributions relatives des différents éléments de construction constitutifs de l'enveloppe du local à la déperdition thermique totale du local, et ainsi de cibler les mesures qu'il convient de prendre pour améliorer la performance thermique.

Dans un mode de réalisation, on détermine le coefficient de déperdition thermique $K$ global du local de la manière suivante :

- on procède, sur chacune desdites périodes de temps $D_k$, à une campagne de mesures d'au moins une température à l'intérieur du local à intervalles de temps rapprochés et à la détermination de la température de l'air extérieur à intervalles de temps rapprochés ;
- on détermine la valeur du coefficient de déperdition thermique $K$ du local en faisant converger :

   ○ un modèle thermique exprimant la variation temporelle de la température à l'intérieur d'un local en fonction de la puissance de chauffe appliquée dans le local, de la température de l'air extérieur et de paramètres physiques du local à partir desquels le coefficient de déperdition thermique du local est calculable, d'une part, et
   ○ l'évolution mesurée de la température à l'intérieur du local en fonction du temps, d'autre part.

De manière avantageuse, les campagnes de mesures du flux thermique $q_k$ à travers les différents éléments de construction constitutifs de l'enveloppe du local et de la température intérieure du local $T_{1k}$ sont faites sur les mêmes périodes de temps $D_k$, correspondant aux mêmes puissances $P_k$ distinctes de chauffe du local. Il est ainsi possible d'accéder lors d'un même test, c'est-à-dire sur la base d'une même sollicitation thermique du premier milieu qui est l'intérieur du local, à la fois aux coefficients de transmission thermique $U$ des différents éléments de construction constitutifs de l'enveloppe du local et au coefficient de déperdition thermique $K$ global du local.

Telle que décrite précédemment, l'invention propose d'imposer des puissances $P_k$ distinctes de chauffe du premier milieu sur au moins deux périodes de temps $D_k$ successives et de mesurer pour chaque période de temps $D_k$ l'évolution temporelle de la température dans le premier milieu $T_{1k}(t)$.

En variante, il est également possible d'imposer des températures $T_{1k}$ distinctes dans le premier milieu sur au moins deux périodes de temps $D_k$ successives et de mesurer pour chaque période de temps $D_k$ l'évolution temporelle de la puissance dans le premier milieu $P_k(t)$.

Selon cette variante, l'invention a pour objet un procédé de détermination d'une grandeur représentative de la résistance thermique d'une paroi de séparation entre un premier milieu et un deuxième milieu, comprenant des étapes dans lesquelles :

- sur au moins deux périodes de temps $D_k$ successives correspondant à des températures $T_{1k}$ distinctes appliquées dans le premier milieu, on procède à une campagne de mesures du flux thermique à travers la paroi $q_k$ et de la puissance dans le premier milieu $P_k$ à intervalles de temps rapprochés, ainsi qu'à la détermination de la température dans le deuxième milieu $T_{2k}$ à intervalles de temps rapprochés ;
- on détermine la valeur de la grandeur représentative de la résistance thermique de la paroi en faisant converger : d'une part, un modèle thermique exprimant la variation temporelle de la puissance dans un milieu séparé d'un autre milieu par une paroi, en fonction du flux thermique à travers la paroi, de la température dans l'autre milieu et de paramètres physiques de la paroi à partir desquels la grandeur représentative de la résistance thermique de la paroi est calculable; et, d'autre part, l'évolution mesurée $P_k(t)$ de la puissance dans le premier milieu en fonction du temps.

De préférence, le procédé est mis en œuvre avec deux périodes de temps $D_1$ et $D_2$ successives correspondant à deux consignes de températures $T_{11}$ et $T_{12}$ distinctes appliquées dans le premier milieu.

Un autre aspect de l'invention, qui peut être considéré indépendamment de la détermination d'une grandeur représentative de la résistance thermique d'une paroi de séparation entre un premier milieu et un deuxième milieu, est un procédé de détermination du coefficient de déperdition thermique $K$ global d'un local, comprenant des étapes dans lesquelles :

- sur au moins deux périodes de temps $D_k$ successives correspondant à des températures $T_{1k}$ distinctes appliquées dans le local, on procède à une campagne de mesures de la puissance dans le local $P_k$ à intervalles de temps rapprochés, ainsi qu'à la détermination de la température de l'air extérieur à intervalles de temps rapprochés ;
- on détermine la valeur du coefficient de déperdition thermique $K$ du local en faisant converger : d'une part, un modèle thermique exprimant la variation temporelle de la puissance à l'intérieur d'un local en fonction de la température appliquée dans le local, de la température de l'air extérieur et de paramètres physiques du local à partir desquels le coefficient de déperdition thermique du local est calculable ; et, d'autre part, l'évolution mesurée $P_k(t)$ de la puissance dans le local en fonction du temps.

De préférence, le procédé est mis en œuvre avec deux périodes de temps $D_1$ et $D_2$ successives correspondant à deux consignes de températures $T_{11}$ et $T_{12}$ distinctes appliquées dans le local.

L'invention a également pour objet un support d'enregistrement d'informations, comportant des instructions pour la mise en œuvre de tout ou partie des étapes de calcul d'un procédé tel que décrit précédemment, lorsque ces instructions sont exécutées par une unité de calcul électronique.

Un autre objet de l'invention est un dispositif pour la mise en œuvre d'un procédé tel que décrit précédemment, comprenant :

- au moins un élément de chauffage comportant une source de puissance contrôlée ;
- au moins un capteur de flux thermique destiné à être positionné sur une face de la paroi pour mesurer le flux thermique à travers la paroi ;
- au moins un capteur de température destiné à mesurer la température dans le premier milieu $T_{1k}$ au voisinage du capteur de flux thermique ;
- une unité de calcul électronique ;
- un support d'enregistrement d'informations comportant des instructions, destinées à être exécutées par l'unité de calcul électronique, pour la mise en œuvre de tout ou partie des étapes de calcul du procédé.

Selon une caractéristique avantageuse, le ou chaque élément de chauffage chauffe l'air dans le premier milieu. Cela permet un chauffage rapide du premier milieu. Tel est le cas notamment avec une pluralité de convecteurs électriques répartis dans le premier milieu, ou avec des tapis chauffants électriques comme décrits précédemment, qui sont disposés verticalement dans le premier milieu et enroulés sur eux-mêmes, de sorte que toute la puissance thermique est dissipée dans l'air.

Selon un aspect de l'invention, le ou les capteurs de température comprennent au moins un capteur de température ambiante destiné à être positionné dans le volume d'air dans le premier milieu.

Selon un aspect de l'invention, le ou les capteurs de température comprennent au moins un capteur de température de surface destiné à être positionné sur, ou en regard de, la surface de la paroi dans le premier milieu.

De manière avantageuse, l'unité de calcul électronique comporte des moyens de commande de la source de puissance du ou de chaque élément de chauffage.

Dans un mode de réalisation, le dispositif comprend au moins un boîtier, comportant à la fois un capteur de flux thermique et un capteur de température, et des moyens de liaison, notamment sans fil, entre le boîtier et l'unité de calcul électronique.

Les caractéristiques et avantages de l'invention apparaîtront dans la description qui va suivre d'un mode de réalisation d'un procédé et d'un dispositif selon l'invention, donnée uniquement à titre d'exemple et faite en se référant aux figures annexées dans lesquelles :

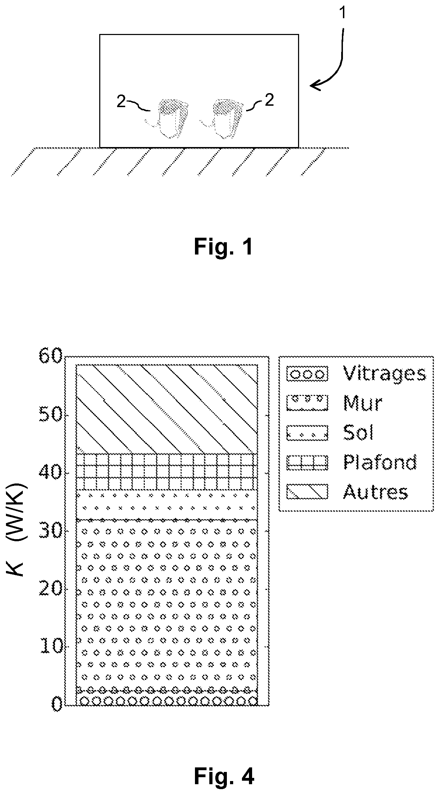

- la figure 1 est une vue schématique d'un bungalow dont l'enveloppe comprend plusieurs éléments de construction, à savoir un sol, un plafond, un mur avec une porte (considérée comme faisant partie du mur), un ensemble de deux vitrages, où l'on souhaite déterminer le coefficient de transmission thermique $U$ de chacun de ces éléments conformément à l'invention ;

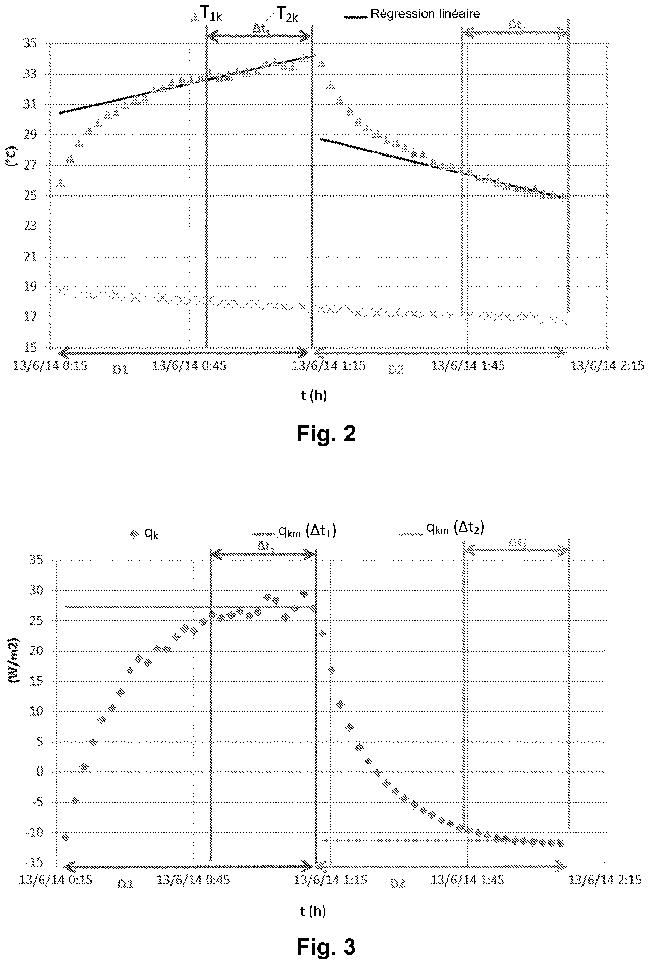

- les figures 2 et 3 sont des graphes montrant, pour l'un des vitrages appartenant à l'enveloppe du bungalow de la figure 1, respectivement l'évolution de la température intérieure $T_{1k}$ en fonction du temps $t$, telle que mesurée par un capteur de température d'air situé au voisinage d'un fluxmètre fixé sur le vitrage, et l'évolution du flux thermique surfacique à travers le vitrage $q_k$ en fonction du temps, telle que mesurée par le fluxmètre précité fixé sur le vitrage, au cours de la mise en œuvre du procédé conforme à l'invention comprenant une première période de temps $D_1$ au cours de laquelle une première puissance de chauffe $P_1$ est appliquée dans le bungalow, où $P_1$ est telle que le

$$\alpha = 1 - \frac{\Delta T_1(0) K_{ref}}{P_1}$$

paramètre du bungalow est compris entre 0,3 et 0,8, suivie d'une deuxième période de temps $D_2$ au cours de laquelle une deuxième puissance de chauffe $P_2$ sensiblement nulle est appliquée dans le bungalow, de manière à laisser le bungalow en refroidissement libre, l'évolution de la température extérieure $T_{2k}$ étant également montrée sur ces figures ;

- la figure 4 est un graphe montrant la répartition des contributions relatives des différents éléments de construction constitutifs de l'enveloppe du bungalow de la figure 1 à la déperdition thermique totale du bungalow ;

- la figure 5 est un schéma d'un modèle dit « 2R2C » du bungalow de la figure 1, avec deux résistances et deux capacités ;

- la figure 6 est un graphe illustrant l'ajustement (fitting) du modèle 2R2C montré sur la figure 5 sur l'évolution de la température intérieure $T_{1k}$ en fonction du temps $t$ montrée sur la figure 2, obtenu en faisant converger le modèle 2R2C et l'évolution mesurée $T_{1k}(t)$ sur l'ensemble des deux périodes de temps $D_1$ et $D_2$ .

Le procédé selon l'invention est mis en œuvre pour la détermination du coefficient de transmission thermique $U$ de plusieurs éléments de construction constitutifs de l'enveloppe du bungalow 1 représenté sur la figure 1, à savoir le sol, le plafond, le mur, et l'ensemble des vitrages du bungalow.

Le bungalow 1 présente une surface au sol de 13,5 m², une surface des vitrages de 3,9 m², une hauteur intérieure de 2,5 m, un volume de 34,2 m³ et une surface totale d'enveloppe de 68,5 m². La paroi externe du bungalow 1 est constituée de panneaux sandwich isolants comprenant une couche de polyuréthane d'épaisseur 35 mm insérée entre deux plaques de métal, d'une porte (considérée comme faisant partie du mur) et de deux vitrages qui sont des triples vitrages.

Le procédé est mis en œuvre alors que le bungalow 1 est inoccupé.

Le coefficient de transmission thermique $U$ de l'enveloppe du bungalow 1, déterminé en utilisant la norme ISO 13789:2007, conduit à une valeur de référence du coefficient de déperdition thermique du bungalow $K_{ref}$ de 60 W/K ± 12 W/K. Le bungalow est un bâtiment très léger, c'est-à-dire à très faible inertie thermique. Sa constante de temps est de quelques heures.

Le chauffage du bungalow 1 est assuré par des tapis chauffants 2 électriques, où chaque tapis chauffant a une puissance nominale de 112,5 W. Les tapis chauffants 2 sont répartis dans le bungalow en étant placés verticalement et enroulés sur eux-mêmes, comme montré schématiquement sur la figure 1, ce qui permet un chauffage rapide et homogène du bungalow.

Le procédé selon l'invention est mis en œuvre en continu dans sa globalité sur une seule période de temps nocturne, afin de s'affranchir de la contribution du rayonnement solaire au chauffage du bungalow 1.

On procède tout d'abord à un chauffage du bungalow sur une première période de temps $D_1$ de 00h15 à 01h10, ce qui correspond à l'application d'une première puissance de chauffe $P_1$ strictement positive, puis à un refroidissement libre du bungalow sur une deuxième période de temps $D_2$ de 01h10 à 02h05, ce qui correspond à l'application d'une deuxième puissance de chauffe $P_2$ sensiblement nulle. La deuxième période de temps $D_2$ est immédiatement consécutive à la première période de temps $D_1$.

Pour chaque période de temps $D_k$, la puissance $P_k$ appliquée est sensiblement égale à la puissance de chauffe imposée par les tapis chauffants 2, aux puissances résiduelles près, provenant notamment du matériel de mesure et de calcul présent dans le bungalow pour la mise en œuvre du procédé. Des capteurs de puissance, sous la forme de boucles ampèremétriques, mesurent la puissance délivrée dans le bungalow lors de la mise en œuvre du procédé.

Dans une première étape du procédé, qui correspond à la première période de temps $D_1$, on procède au chauffage du bungalow 1 à l'aide des tapis chauffants 2. La première puissance de chauffe $P_1$ appliquée sur la première

$$\alpha = 1 - \frac{\Delta T_1(0) K_{ref}}{P_1}$$

période de temps $D_1$ est choisie de telle sorte que le paramètre est compris entre 0,3 et 0,8. Dans cet exemple, la valeur de référence $K_{ref}$ est égale à 60 W/K $\pm$ 12 W/K, la température intérieure initiale à l'intérieur du bungalow $T_{11d}$ est 25,6°C, et la température initiale de l'air extérieur $T_{21d}$ est 18,7°C, ce qui correspond, pour une valeur du paramètre $\alpha$ sensiblement égale à 0,4, à une valeur de la première puissance de chauffe $P_1$ environ égale à 1370 W.

La température ambiante à l'intérieur du bungalow $T_{11}$ est alors mesurée toutes les dix secondes, d'une part au voisinage de chaque élément de construction parmi le sol, le plafond, le mur, les deux vitrages, et d'autre part au milieu du volume d'air. A cet effet, plusieurs capteurs de température, qui sont dans cet exemple des thermocouples de type K, sont installés dans l'air ambiant dans le bungalow, à savoir un thermocouple au voisinage de chaque élément de construction et un thermocouple au milieu du volume d'air à 110 cm de hauteur.

La courbe représentative de l'évolution de la température intérieure $T_{11}$ au voisinage d'un vitrage du bungalow en fonction du temps pendant la première période de temps $D_1$ est montrée sur la figure 2. Comme visible sur cette figure, la courbe de montée en température au voisinage du vitrage présente une partie sensiblement linéaire sur l'intervalle de temps $\Delta t_1$. La mise en équation de cette partie linéaire de la courbe donne une pente $a_1$ de 4,79 K/h. Les valeurs de pente $a_1$ pour les différents éléments sont données dans le tableau 1 ci-dessous.

La figure 2 fait également apparaître l'évolution de la température de l'air extérieur $T_{21}$ pendant la première période de temps $D_1$. La température de l'air extérieur $T_{21}$ sur l'intervalle de temps $\Delta t_1$ est suffisamment stable pour qu'on puisse la considérer sensiblement constante et égale à la température moyenne sur l'intervalle de temps $\Delta t_1$, à savoir dans cet exemple $T_{21m}$ = 18,1°C.

Le flux thermique à travers chaque élément de construction est également mesuré toutes les dix secondes, à l'aide d'un fluxmètre à gradient de type HFP01 commercialisé par la société Hukseflux positionné sur la face intérieure de l'élément de construction. A titre d'exemple, la courbe représentative de l'évolution du flux thermique $q_1$, à travers un vitrage en fonction du temps pendant la première période de temps $D_1$ est montrée sur la figure 3. Les valeurs de flux moyens $q_{1m}$ sur l'intervalle de temps $\Delta t_1$ pour les différents éléments sont données dans le tableau 1 ci-dessous.

Dans une deuxième étape du procédé, qui correspond à la deuxième période de temps $D_2$, on applique la deuxième puissance de chauffe $P_2$ sensiblement nulle dans le bungalow 1, à partir d'une température de départ $T_{12d}$ = 34,7°C, c'est-à-dire que les tapis chauffants 2 ne fonctionnent pas pendant cette deuxième période $D_2$. Comme dans la première étape, la température ambiante à l'intérieur du bungalow $T_{12}$ est alors mesurée toutes les dix secondes, d'une part au voisinage de chaque élément de construction parmi le sol, le plafond, le mur, les deux vitrages, et d'autre part au milieu du volume d'air, à l'aide de thermocouples de type K installés dans l'air ambiant dans le bungalow, à savoir un thermocouple au voisinage de chaque élément de construction et un thermocouple au milieu du volume d'air à 110 cm de hauteur.

La figure 2 montre la courbe représentative de l'évolution de la température intérieure $T_{12}$ au voisinage d'un vitrage du bungalow en fonction du temps pendant la deuxième période de temps $D_2$. Comme visible sur cette figure, la courbe de descente en température au voisinage du vitrage présente une partie sensiblement linéaire sur l'intervalle de temps $\Delta t_2$. La mise en équation de cette partie linéaire de la courbe donne une pente de $a_2$ de -5,58 K/h. Les valeurs de pente $a_2$ pour les différents éléments sont données dans le tableau 1 ci-dessous.

L'évolution de la température de l'air extérieur $T_{22}$ pendant la même période de temps $D_2$ est également montrée sur la figure 2. Comme dans la première étape, la température de l'air extérieur $T_{22}$ sur l'intervalle de temps $\Delta t_2$ est suffisamment stable pour qu'on puisse la considérer sensiblement constante et égale à la température moyenne sur l'intervalle de temps $\Delta t_2$, à savoir dans cet exemple $T_{22m}$ = 17,1°C.

Le flux thermique à travers chaque élément de construction est également mesuré toutes les dix secondes, à l'aide d'un fluxmètre à gradient de type HFP01 positionné sur la face intérieure de l'élément de construction. A titre d'exemple, la courbe représentative de l'évolution du flux thermique $q_2$ à travers un vitrage du bungalow en fonction du temps pendant la deuxième période de temps $D_2$ est montrée sur la figure 3. Les valeurs de flux moyens $q_{2m}$ sur l'intervalle de temps $\Delta t_2$ pour les différents éléments sont données dans le tableau 1 ci-dessous.

$$U = \frac{a_1 q_2 - a_2 q_1}{a_1 \Delta T_{2m} - a_2 \Delta T_{1m}},$$

Comme en prenant $\Delta T_{1m}$ = 15,9°C, $\Delta T_{2m}$ = 7,8°C, $q_{1m}$ = 18,70 W/m², $q_{2m}$ = -3,90 W/m², on obtient la valeur du coefficient de transmission thermique $U$ des vitrages du bungalow 1 :

$$U = 0,68 \text{ W/m}^2\text{K}.$$

Les valeurs du coefficient de transmission thermique $U$ pour les différents éléments de construction constitutifs de l'enveloppe du bungalow 1 sont données dans le tableau 1 ci-dessous.

**Tableau 1**

| Elément | $a_1$ (K/h) | $a_2$ (K/h) | $q_{1m}$ (W/m²) | $q_{2m}$ (W/m²) | $\Delta T_{1m}$ (°C) | $\Delta T_{2m}$ (°C) | $U$ (W/m²K) |
|---|---|---|---|---|---|---|---|
| Vitrages | 4,79 | -5,58 | 18,70 | -3,90 | 15,9 | 7,8 | 0,68 |
| Mur (y compris porte) | 4,46 | -5,42 | 21,97 | -4,47 | 16,7 | 8,1 | 0,78 |
| Sol | 4,13 | -4,21 | 7,82 | 0,25 | 13,3 | 8,0 | 0,38 |
| Plafond | 4,42 | -5,75 | 6,66 | 5,28 | 16,8 | 8,1 | 0,46 |

En comparaison, la valeur calculée selon la norme ISO 6946:2007 du coefficient de transmission thermique $U$ du mur est 0,70 W/m²K $\pm$ 0,13 W/m²K, et celle du plafond est de 0,43 W/m²K $\pm$ 0,07 W/m²K. De plus, la valeur fournie par le fabricant, calculée selon la norme ISO 10077:2012, du coefficient de transmission thermique $U$ des vitrages est de 0,70 W/m²K. Pour le sol, il y a trop d'incertitude pour accéder à une valeur calculée du coefficient de transmission thermique $U$ selon la norme ISO 13370:2007.

Grâce aux mesures réalisées pendant les périodes de temps $D_1$ et $D_2$, il est également possible de déterminer

$$K = \frac{a_1 P_2 - a_2 P_1}{a_1 \Delta T_{2m} - a_2 \Delta T_{1m}},$$

la valeur du coefficient de déperdition thermique $K$ du bungalow 1. Comme en prenant $a_1$ = 4,62 K/h, $a_2$ = -5,37 K/h, $\Delta T_{1m}$ = 16,6°C, $\Delta T_{2m}$ = 8,0°C, $P_1$ = 1370 W, $P_2$ = 5 W, on obtient la valeur du coefficient de déperdition thermique $K$ du bungalow 1 :

$$K = 58,70 \text{ W/K}.$$

Il est alors possible de tracer le graphe montrant la répartition des contributions relatives des différents éléments de construction constitutifs de l'enveloppe du local à la déperdition thermique totale du local. Ce graphe, obtenu en pondérant le coefficient de transmission thermique $U$ de chaque élément de construction par sa surface déperditive A, est montré sur la figure 4. Le détail pour chaque élément de construction est donné dans le tableau 2 ci-dessous.

**Tableau 2**

| Elément | $U$ (W/m²K) | A (m²) | $K$ (W/K) |
|---|---|---|---|
| Vitrages | 0,68 | 3,9 | 2,65 |
| Mur (y compris porte) | 0,78 | 37,6 | 29,3 |
| Sol | 0,38 | 13,5 | 5,1 |

(suite)

| Elément | $U$ (W/m$^2$K) | A (m$^2$) | $K$ (W/K) |
|---|---|---|---|
| **Plafond** | 0,46 | 13,5 | 6,2 |
| **Autres** (infiltrations, ponts thermiques...) | - | - | 15,4 |

L'obtention de la répartition des pertes entre les différents éléments de construction est un outil utile pour la prescription, en particulier dans un contexte de rénovation.

La méthode de traitement des données décrite ci-dessus correspond au cas où le modèle thermique utilisé est un modèle R-C simple avec une résistance et une capacité.

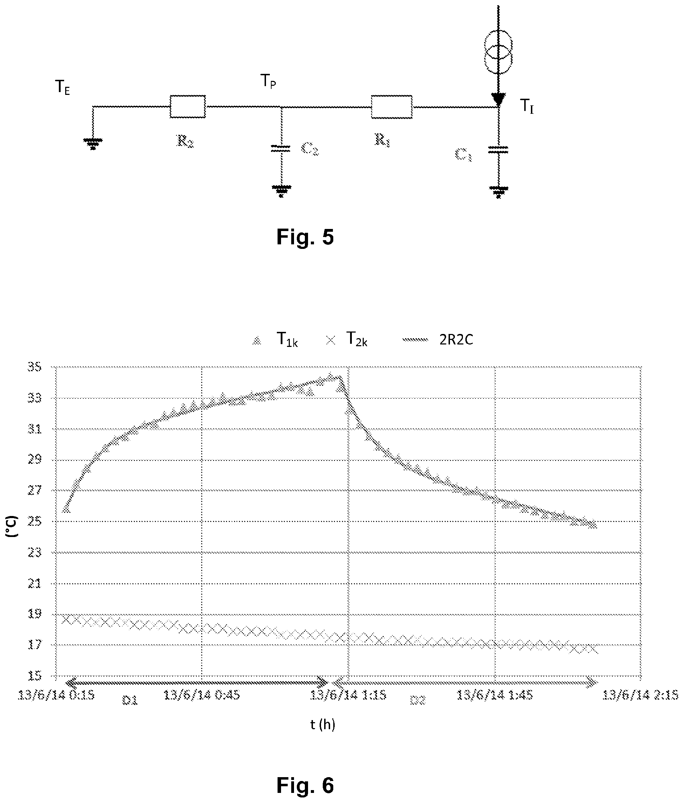

En variante, les courbes d'évolution de la température intérieure en fonction du temps pour chaque élément de construction constitutif de l'enveloppe du bungalow 1, à savoir le sol, le plafond, le mur, l'ensemble des deux vitrages, ont été traitées avec un modèle 2R2C du bungalow avec deux résistances et deux capacités, dont un schéma est montré sur la figure 5.

Dans ce modèle 2R2C, l'ambiance extérieure est considérée comme étant à température constante imposée $T_E$, deux nœuds $T_P$ et $T_I$ représentent schématiquement les masses thermiques des parois et de l'air intérieur et ont chacune une valeur d'inertie $C_1$, $C_2$ associée, et deux résistances $R_1$, $R_2$ sont placées entre les nœuds. Une résistance $R_2$, placée entre l'ambiance extérieure et le nœud des parois, représente la résistance du mur, tandis que l'autre résistance $R_1$, placée entre le nœud des parois et celui de l'ambiance intérieure, représente la résistance de convection intérieure. Dans ce cas, le coefficient de déperdition thermique $K$ est l'inverse de la résistance totale, somme des deux résistances du réseau.

A titre d'exemple, la figure 6 montre l'ajustement (fitting) du modèle 2R2C décrit ci-dessus sur l'évolution de la température intérieure $T_{1k}$ au voisinage d'un vitrage en fonction du temps $t$ montrée sur la figure 2. Les valeurs du coefficient de transmission thermique $U$ obtenues pour les différents éléments de construction constitutifs de l'enveloppe du bungalow 1 dans le cas où le modèle thermique utilisé est un modèle 2R2C sont données dans le tableau 3 ci-dessous.

**Tableau 3**

| Elément | U (W/m$^2$K) |
|---|---|
| **Vitrages** | 0,68 |
| **Mur** (y compris porte) | 0,78 |
| **Sol** | 0,56 |
| **Plafond** | 0,45 |

On constate que les valeurs de coefficient de transmission thermique U obtenues avec le modèle 2R2C sont globalement cohérentes avec celles obtenues avec le modèle R-C simple, certains écarts étant liés à une plus grande imprécision de l'approche par le modèle 2R2C.

En pratique, dans l'exemple précédent avec le modèle R-C simple, les étapes de sélection des intervalles de temps $\Delta t_k$ pour le traitement des données, de linéarisation, et de calcul de $U$ et $K$ à partir des pentes $a_k$, sont avantageusement réalisées au moyen d'une unité de calcul électronique.

L'invention n'est pas limitée aux exemples décrits ci-dessus.

En particulier, le procédé selon l'invention peut être mis en œuvre avec des moyens de chauffage qui équipent le premier milieu de manière fixe et/ou avec des moyens de chauffage qui sont rapportés dans le premier milieu spécifiquement pour la mise en œuvre du procédé, pour autant que la puissance fournie par ces moyens de chauffage pour les impulsions requises par le procédé puisse être déterminée de manière précise.

Par ailleurs, dans les exemples précédents, le procédé de détermination d'une grandeur représentative de la résistance thermique d'une paroi et le procédé de détermination du coefficient de déperdition thermique d'un local sont mis en œuvre avec des périodes de temps $D_k$ correspondant à des consignes de puissance de chauffe $P_k$ distinctes. Bien entendu, en variante, la puissance de chauffe peut varier sur une (ou plusieurs) des périodes de temps $D_k$, pour autant qu'elle assure sur la période $D_k$ une puissance de chauffe moyenne $P_k$ distincte des puissances de chauffe appliquées sur les périodes de temps qui l'entourent. Dans ce cas, la puissance de chauffe $P_k$ considérée est la puissance de chauffe moyenne sur la période de temps $D_k$.

**Revendications**

1. Procédé de détermination d'une grandeur représentative de la résistance thermique ($U$, $R_T$, $R$) d'une paroi de séparation entre un premier milieu et un deuxième milieu, **caractérisé en ce qu'**il comprend des étapes dans lesquelles :

   - sur au moins deux périodes de temps $D_k$ successives correspondant à des puissances $P_k$ distinctes de chauffe du premier milieu, respectivement à des températures distinctes appliquées dans le premier milieu, on procède à une campagne de mesures du flux thermique à travers la paroi $q_k$ et de la température dans le premier milieu $T_{1k}$, respectivement de la puissance dans le premier milieu, à intervalles de temps rapprochés, ainsi qu'à la détermination de la température dans le deuxième milieu $T_{2k}$ à intervalles de temps rapprochés ;
   - on détermine la valeur de la grandeur représentative de la résistance thermique ($U$, $R_T$, $R$) de la paroi en faisant converger :

     ◦ d'une part, un modèle thermique exprimant la variation temporelle de la température, respectivement la variation temporelle de la puissance, dans un milieu séparé d'un autre milieu par une paroi, en fonction du flux thermique à travers la paroi, de la température dans l'autre milieu et de paramètres physiques de la paroi à partir desquels la grandeur représentative de la résistance thermique de la paroi est calculable, et
     ◦ d'autre part, l'évolution mesurée de la température $T_{1k}(t)$, respectivement de la puissance, dans le premier milieu en fonction du temps.

2. Procédé selon la revendication 1, **caractérisé en ce qu'**il est mis en œuvre avec deux périodes de temps $D_1$ et $D_2$ successives correspondant à deux consignes de puissances $P_1$ et $P_2$ distinctes de chauffe du premier milieu, respectivement à deux consignes de températures distinctes appliquées dans le premier milieu.

3. Procédé selon l'une quelconque des revendications précédentes, **caractérisé en ce que** les mesures du flux thermique à travers la paroi $q_k$ sont effectuées à l'aide d'au moins un capteur de flux thermique positionné sur une face de la paroi.

4. Procédé selon la revendication 3, **caractérisé en ce que** les mesures de la température dans le premier milieu $T_{1k}$ sont effectuées à l'aide d'au moins un capteur de température positionné dans le premier milieu au voisinage du capteur de flux thermique.

5. Procédé selon l'une quelconque des revendications précédentes, **caractérisé en ce que** les mesures de la température dans le premier milieu $T_{1k}$ sont effectuées à l'aide d'au moins un capteur de température ambiante positionné dans le volume d'air dans le premier milieu.

6. Procédé selon l'une quelconque des revendications précédentes, **caractérisé en ce que** les mesures de la température dans le premier milieu $T_{1k}$ sont effectuées à l'aide d'au moins un capteur de température de surface positionné sur ou en regard de la surface de la paroi dans le premier milieu.

7. Procédé selon l'une quelconque des revendications précédentes, **caractérisé en ce que** le modèle thermique est un modèle R-C avec une résistance et une capacité.

8. Procédé selon l'une quelconque des revendications précédentes, **caractérisé en ce qu'**il comprend des étapes dans lesquelles :

   - on procède, sur deux périodes de temps $D_1$ et $D_2$ successives :

     i. sur la première période de temps $D_1$, à l'application d'une première puissance de chauffe $P_1$ du premier milieu, et à une campagne de mesures du flux thermique à travers la paroi $q_1$ et de la température dans le premier milieu $T_{11}$ à intervalles de temps rapprochés, ainsi qu'à la détermination de la température dans le deuxième milieu $T_{21}$ à intervalles de temps rapprochés, la première puissance de chauffe $P_1$ étant telle

$$\alpha = 1 - \frac{\Delta T_1(0)K_{ref}}{P_1}$$

que le paramètre est inférieur ou égal à 0,8, avec $\Delta T_1$, (0) = $T_{11}$ ($t$ = 0) - $T_{2m}$, où $t$ = 0 est le point de départ de la première période de temps $D_1$, $T_{2m}$ est la température moyenne dans le deuxième milieu sur l'ensemble des périodes de temps $D_1$ et $D_2$, et $K_{ref}$ est une valeur de référence du coefficient de déperdition thermique $K$ du premier milieu, puis

ii. sur la deuxième période de temps $D_2$, à l'application d'une deuxième puissance de chauffe $P_2$ du premier milieu sensiblement nulle, et à une campagne de mesures du flux thermique à travers la paroi $q_2$ et de la température dans le premier milieu $T_{12}$ à intervalles de temps rapprochés, ainsi qu'à la détermination de la température dans le deuxième milieu $T_{22}$ à intervalles de temps rapprochés ;

- on détermine la valeur de la grandeur représentative de la résistance thermique ($U$, $R_T$, $R$) de la paroi en faisant converger :

  ◦ un modèle thermique exprimant la variation temporelle de la température dans un milieu séparé d'un autre milieu par une paroi, en fonction du flux thermique à travers la paroi, de la température dans l'autre milieu et de paramètres physiques de la paroi à partir desquels la grandeur représentative de la résistance thermique de la paroi est calculable, d'une part, et
  ◦ l'évolution mesurée $T_{1k}(t)$ de la température dans le premier milieu en fonction du temps, d'autre part.

**9.** Procédé selon la revendication 8, **caractérisé en ce que** la première puissance de chauffe $P_1$ est telle que le

$$\alpha = 1 - \frac{\Delta T_1(0)K_{ref}}{P_1}$$

paramètre est supérieur ou égal à 0,25, de préférence supérieur ou égal à 0,3.

**10.** Procédé selon la revendication 7, **caractérisé en ce que**, pour chaque période de temps $D_k$, il existe un intervalle de temps $\Delta t_k$, pour lequel l'évolution mesurée $T_{1k}(t)$ de la température dans le premier milieu en fonction du temps est sensiblement linéaire, et **en ce qu'**on fait converger le modèle R-C et l'évolution mesurée $T_{1k}(t)$ de la manière suivante: pour chaque période de temps $D_k$ on détermine sur l'intervalle de temps $\Delta t_k$ la pente $a_k$ de la tangente à la courbe $T_{1k}(t)$, et on détermine la valeur de la grandeur représentative de la résistance thermique ($R$, $R_T$, $U$) de la paroi à partir des valeurs de pente $a_k$ et des valeurs de flux thermique moyen à travers la paroi $q_{km}$ pris sur la période de temps $D_k$ ou, de préférence, pris sur l'intervalle de temps $\Delta t_k$.

**11.** Procédé selon l'une quelconque des revendications précédentes, **caractérisé en ce que**, pour chaque période de temps $D_k$, la puissance $P_k$ de chauffe du premier milieu comprend une puissance de chauffe $P_{impk}$ imposée au moyen d'une source de puissance contrôlée.

**12.** Procédé selon la revendication 11, **caractérisé en ce que** la source de puissance contrôlée est un équipement fixe du premier milieu.

**13.** Procédé selon la revendication 11, **caractérisé en ce que** la source de puissance contrôlée est une source rapportée dans le premier milieu spécifiquement pour la mise en œuvre du procédé.

**14.** Procédé de détermination des propriétés thermiques d'un local, **caractérisé en ce qu'**on détermine le coefficient de transmission thermique U de chaque élément de construction appartenant à l'enveloppe du local par le procédé de l'une quelconque des revendications 1 à 13, où chaque élément de construction est une paroi de séparation entre un premier milieu qui est l'intérieur du local et un deuxième milieu qui est l'extérieur du local, les campagnes de mesures du flux thermique à travers l'élément de construction $q_k$ et de la température intérieure $T_{1k}$ étant faites pour tous les éléments de construction de l'enveloppe sur les mêmes périodes de temps $D_k$ correspondant à des puissances $P_k$ distinctes de chauffe du local.

**15.** Procédé selon la revendication 14, **caractérisé en ce qu'**on détermine également le coefficient de déperdition thermique $K$ du local.

**16.** Procédé selon la revendication 15, **caractérisé en ce qu'**on détermine le coefficient de déperdition thermique $K$

du local de la manière suivante :

- on procède, sur chacune desdites périodes de temps $D_k$, à une campagne de mesures d'au moins une température à l'intérieur du local à intervalles de temps rapprochés et à la détermination de la température de l'air extérieur à intervalles de temps rapprochés ;
- on détermine la valeur du coefficient de déperdition thermique $K$ du local en faisant converger :

○ un modèle thermique exprimant la variation temporelle de la température à l'intérieur d'un local en fonction de la puissance de chauffe appliquée dans le local, de la température de l'air extérieur et de paramètres physiques du local à partir desquels le coefficient de déperdition thermique du local est calculable, d'une part, et

○ l'évolution mesurée de la température à l'intérieur du local en fonction du temps, d'autre part.

17. Support d'enregistrement d'informations, **caractérisé en ce qu'**il comporte des instructions pour la mise en œuvre des étapes de calcul d'un procédé selon l'une quelconque des revendications précédentes lorsque ces instructions sont exécutées par une unité de calcul électronique.

18. Dispositif pour la mise en œuvre d'un procédé selon l'une quelconque des revendications 1 à 16, **caractérisé en ce qu'**il comprend :

- au moins un élément de chauffage comportant une source de puissance contrôlée ;
- au moins un capteur de flux thermique destiné à être positionné sur une face de la paroi pour mesurer le flux thermique à travers la paroi ;
- au moins un capteur de température destiné à mesurer la température dans le premier milieu $T_{1k}$ au voisinage du capteur de flux thermique ;
- une unité de calcul électronique ;
- un support d'enregistrement d'informations comportant la température dans le deuxième milieu $T_{2k}$ et des instructions, destinées à être exécutées par l'unité de calcul électronique, pour la mise en œuvre des étapes de calcul du procédé.

19. Dispositif selon la revendication 18, **caractérisé en ce que** le ou chaque élément de chauffage chauffe l'air dans le premier milieu.

20. Dispositif selon l'une quelconque des revendications 18 ou 19, **caractérisé en ce que** le ou les capteurs de température comprennent au moins un capteur de température ambiante destiné à mesurer la température de l'air dans le premier milieu.

21. Dispositif selon l'une quelconque des revendications 18 à 20, **caractérisé en ce que** le ou les capteurs de température comprennent au moins un capteur de température de surface destiné à mesurer la température de surface de la paroi dans le premier milieu.

22. Dispositif selon l'une quelconque des revendications 18 à 21, **caractérisé en ce que** l'unité de calcul électronique comporte des moyens de commande de la source de puissance du ou de chaque élément de chauffage.

23. Dispositif selon l'une quelconque des revendications 18 à 22, **caractérisé en ce qu'**il comprend :

- au moins un boîtier comportant à la fois un capteur de flux thermique et un capteur de température,
- des moyens de liaison, notamment sans fil, entre le boîtier et l'unité de calcul électronique.

**Patentansprüche**

1. Verfahren zum Bestimmen einer repräsentativen Größe des Wärmewiderstands *(U, $R_T$, R)* einer Trennwand zwischen einem ersten Medium und einem zweiten Medium, **dadurch gekennzeichnet, dass** es die Schritte umfasst, bei denen:

- über mindestens zwei aufeinander folgende Zeiträume $D_k$, entsprechend den unterschiedlichen Heizleistungen $P_k$ des ersten Mediums bzw. den unterschiedlichen Temperaturen im ersten Medium, eine Messreihe von dem Wärmestrom durch die Wand $q_k$ und von der Temperatur im ersten Medium $T_{1k}$ bzw. von der Leistung im ersten Medium in kurzen Zeitintervallen durchgeführt wird, sowie in kurzen Zeitintervallen die Bestimmung der Temperatur im zweiten Medium $T_{2k}$;

- der Wert der repräsentativen Größe des Wärmewiderstands *(U, $R_T$, R)* der Wand durch Konvergieren bestimmt wird:

o einerseits eines thermischen Modells, das die zeitliche Änderung der Temperatur ausdrückt bzw. die zeitliche Änderung der Leistung in einem Medium, das durch eine Wand von einem anderen Medium getrennt ist, in Abhängigkeit vom Wärmestrom durch die Wand, von der Temperatur in dem anderen Medium und von den physikalischen Merkmalen der Wand, aus denen die repräsentative Größe des Wärmewiderstands der Wand berechenbar ist,
und
o andererseits, des gemessenen Verlaufs der Temperatur $T_{1k}$ *(t)*, bzw. der Leistung im ersten Medium in Abhängigkeit der Zeit.

2. Verfahren nach Anspruch 1, **dadurch gekennzeichnet, dass** es mit zwei aufeinanderfolgenden Zeiträumen $D_1$ und $D_2$, entsprechend den zwei Sollvorgaben der unterschiedlichen Heizleistungen $P_1$ und $P_2$ des ersten Mediums bzw. den zwei Sollvorgaben der unterschiedlichen Temperaturen, im ersten Medium umgesetzt wird.

3. Verfahren nach einem der vorstehenden Ansprüche, **dadurch gekennzeichnet, dass** die Messungen des Wärmestroms durch die Wand $q_k$ mittels mindestens eines Wärmestromsensors durchgeführt werden, der auf einer Seite der Wand positioniert ist.

4. Verfahren nach Anspruch 3, **dadurch gekennzeichnet, dass** die Messungen der Temperatur im ersten Medium $T_{1k}$ mittels mindestens eines Temperatursensors durchgeführt werden, der im ersten Medium nahe dem Wärmestromsensor positioniert ist.

5. Verfahren nach einem der vorstehenden Ansprüche, **dadurch gekennzeichnet, dass** die Messungen der Temperatur im ersten Medium $T_{1k}$ mittels mindestens eines Umgebungstemperatursensors durchgeführt werden, der im Luftvolumen im ersten Medium positioniert ist.

6. Verfahren nach einem der vorstehenden Ansprüche, **dadurch gekennzeichnet, dass** die Messungen der Temperatur im ersten Medium $T_{1k}$ mittels mindestens eines Oberflächentemperatursensors durchgeführt werden, der im ersten Medium auf der Oberfläche der Wand oder dieser zugewandt positioniert ist.

7. Verfahren nach einem der vorstehenden Ansprüche, **dadurch gekennzeichnet, dass** das thermische Modell ein R-C Modell mit einem Widerstand und einer Kapazität ist.

8. Verfahren nach einem der vorstehenden Ansprüche, **dadurch gekennzeichnet, dass** es die Schritte umfasst, bei denen:

- über zwei aufeinander folgende Zeiträume $D_1$ und $D_2$ Folgendes durchgeführt wird:

i. über den ersten Zeitraum $D_1$, die Anwendung einer ersten Heizleistung $P_1$ des ersten Mediums, und eine Messreihe von dem Wärmestrom durch die Wand $q_1$ und von der Temperatur im ersten Medium $T_{11}$ in kurzen Zeitintervallen, sowie die Bestimmung der Temperatur im zweiten Medium $T_{21}$ in kurzen Zeitintervallen, wobei die erste Wärmeleistung $P_1$ derart ist, dass der Parameter $\alpha = 1 - \dfrac{\Delta T_1(0) K_{ref}}{P_1}$ kleiner oder gleich 0,8 ist, mit $\Delta T_1(0) = T_{11}$ $(t = 0) - T_{2m}$, wobei $t = 0$ der Startpunkt des ersten Zeitraums $D_1$ ist, $T_{2m}$ die Durchschnittstemperatur im zweiten Medium über den gesamten Zeitraum $D_1$ und $D_2$ ist und $K_{ref}$ ein Referenzwert des Wärmeverlustkoeffizienten $K$ des ersten Mediums ist, dann

ii. über den zweiten Zeitraum $D_2$, die Anwendung einer zweiten Heizleistung $P_2$ des ersten Mediums, die im Wesentlichen gleich Null ist, und eine Messreihe von dem Wärmestrom durch die Wand $q_2$ und von der Temperatur im ersten Medium $T_{12}$ in kurzen Zeitintervallen, sowie die Bestimmung der Temperatur im zweiten Medium $T_{22}$ in kurzen Zeitintervallen;

- der Wert der repräsentativen Größe des Wärmewiderstands *(U, R_T, R)* der Wand durch Konvergieren bestimmt wird:

> o eines thermischen Modells, das die zeitliche Änderung der Temperatur in einem Medium ausdrückt, das durch eine Wand von einem anderen Medium getrennt ist, in Abhängigkeit vom Wärmestrom durch die Wand, von der Temperatur in dem anderen Medium und von den physikalischen Merkmalen der Wand, aus denen die repräsentative Größe des Wärmewiderstands der Wand berechenbar ist, einerseits, und
> o des gemessenen Verlaufs der Temperatur $T_{1k}$ *(t)* im ersten Medium in Abhängigkeit der Zeit, andererseits.

**9.** Verfahren nach Anspruch 8, **dadurch gekennzeichnet, dass** die erste Heizleistung $P_1$ derart ist, dass der Parameter

$$\alpha = 1 - \frac{\Delta T_1(0) K_{ref}}{P_1}$$ größer oder gleich 0,25 ist, vorzugsweise größer oder gleich 0,3.

**10.** Verfahren nach Anspruch 7, **dadurch gekennzeichnet, dass** es für jeden Zeitraum $D_k$ ein Zeitintervall $\Delta t_k$ existiert, bei dem der Verlauf der gemessenen Temperatur $T_{1k}$ *(t)* im ersten Medium in Abhängigkeit von der Zeit im Wesentlichen linear ist, und bei dem das R-C Modell und der gemessene Verlauf $T_{1k}$ *(t)* wie folgt konvergieren: für jeden Zeitraum $D_k$ bestimmt man über den Zeitintervall $\Delta t_k$ die Steigung $a_k$ der Tangente an der Kurve $T_{1k}$ *(t),* und man bestimmt den Wert der repräsentativen Größe des Wärmewiderstands *(R, R_T, U)* der Wand aus den Werten der Steigung $a_k$ und den Werten des durchschnittlichen Wärmestroms durch die Wand $q_{km}$, die über dem Zeitraum $D_k$ entnommen werden, vorzugsweise über dem Zeitintervall $\Delta t_k$.

**11.** Verfahren nach einem der vorstehenden Ansprüche, **dadurch gekennzeichnet, dass** für jeden Zeitraum $D_k$, die Heizleistung $P_k$ des ersten Mediums eine Heizleistung $P_{impk}$ umfasst, die mittels einer kontrollierten Leistungsquelle aufgebracht wird.

**12.** Verfahren nach Anspruch 11, **dadurch gekennzeichnet, dass** die kontrollierte Leistungsquelle ein feste Ausrüstung des ersten Mediums ist.

**13.** Verfahren nach Anspruch 11, **dadurch gekennzeichnet, dass** die kontrollierte Leistungsquelle eine verschaltete Quelle im ersten Medium ist, speziell für die Durchführung des Verfahrens.

**14.** Verfahren zum Bestimmen der thermischen Eigenschaften eines Raumes, **dadurch gekennzeichnet, dass** der Wärmedurchgangskoeffizient U von jedem Bauelement bestimmt wird, der zur Hülle des Raumes gehört, mittels des Verfahrens nach einem der Ansprüche 1 bis 13, wobei jedes Bauelement eine Trennwand zwischen einem ersten Medium, das innerhalb des Raumes ist, und einem zweiten Medium ist, das außerhalb des Raumes ist, wobei die Messreihen von dem Wärmestrom durch das Bauelement $q_k$ und von der Innentemperatur $T_{1k}$ für alle Bauelemente der Hülle über den gleichen Zeitraum $D_k$, entsprechend den unterschiedlichen Heizleistungen $P_k$ des Raumes, durchgeführt werden.

**15.** Verfahren nach Anspruch 14, **dadurch gekennzeichnet, dass** außerdem der Wärmeverlustkoeffizienten *K* des Raumes bestimmt wird.

**16.** Verfahren nach Anspruch 15, **dadurch gekennzeichnet, dass** der Wärmeverlustkoeffizienten *K* des Raumes wie folgt bestimmt wird:

- Durchführen über jeden der Zeiträume $D_k$ einer Messreihe von mindestens einer Temperatur innerhalb des Raumes in kurzen Zeitintervallen und Bestimmen der Temperatur der Außenluft in kurzen Zeitintervallen;
- Bestimmen des Wertes des Wärmeverlustkoeffizienten K des Raumes, durch Konvergieren:

> o eines thermischen Modells, das die zeitliche Änderung von der Temperatur innerhalb des Raumes in Abhängigkeit von der Heizleistung, die in dem Raum angewendet wird, von der Temperatur der Außenluft und von den physikalischen Merkmalen des Raumes, aus denen der Wärmeverlustkoeffizient des Raumes berechenbar ist, ausdrückt, einerseits, und

o des gemessenen Verlaufs der Temperatur innerhalb des Raumes in Abhängigkeit der Zeit, andererseits.

**17.** Informationsaufzeichnungsträger, **dadurch gekennzeichnet, dass** er Anweisungen zum Durchführen der Berechnungsschritte eines Verfahrens nach einem der vorstehenden Ansprüche umfasst, wobei die Anweisungen von einer elektronischen Recheneinheit ausgeführt werden.

**18.** Vorrichtung zum Durchführen eines Verfahrens nach einem der Ansprüche 1 bis 16, **dadurch gekennzeichnet, dass** sie Folgendes umfasst:

- mindestens ein Heizelement, umfassend eine kontrollierte Leistungsquelle;
- mindestens einen Wärmestromsensor, der auf einer Seite der Wand zu positionieren ist, um den Wärmestrom durch die Wand zu messen;
- mindestens einen Temperatursensor, der zum Messen der Temperatur im ersten Medium $T_{1k}$ nahe dem Wärmestromsensor ausgelegt ist;
- eine elektronische Recheneinheit;
- einen Informationsaufzeichnungsträger, umfassend die Temperatur im zweiten Medium $T_{2k}$ und Anweisungen, die zum Ausführen durch eine elektronische Recheneinheit ausgelegt sind, um die Berechnungsschritte des Verfahrens durchzuführen.

**19.** Vorrichtung nach Anspruch 18, **dadurch gekennzeichnet, dass** das oder jedes Heizelement die Luft im ersten Medium erhitzt.

**20.** Vorrichtung nach einem der Ansprüche 18 oder 19, **dadurch gekennzeichnet, dass** der oder die Temperatursensor(en) mindestens einen Umgebungstemperatursensor umfassen, der zum Messen der Temperatur der Luft im ersten Medium ausgelegt ist.

**21.** Vorrichtung nach einem der Ansprüche 18 bis 20, **dadurch gekennzeichnet, dass** der oder die Temperatursensor(en) mindestens einen Oberflächentemperatursensor umfassen, der zum Messen der Temperatur der Oberfläche der Wand im ersten Medium ausgelegt ist.

**22.** Vorrichtung nach einem der Ansprüche 18 bis 21, **dadurch gekennzeichnet, dass** die elektronische Recheneinheit Mittel zum Steuern der Leistungsquelle von dem oder jedem Heizelement umfasst.

**23.** Vorrichtung nach einem der Ansprüche 18 bis 22, **dadurch gekennzeichnet, dass** sie Folgendes umfasst:

- mindestens ein Gehäuse, umfassend sowohl einen Wärmestromsensor als auch einen Temperatursensor,
- Verbindungsmittel, insbesondere drahtlose, zwischen dem Gehäuse und der elektronischen Recheneinheit.

## Claims

**1.** Method for determining a quantity representative of the thermal resistance ($U$, $R_T$, $R$) of a dividing wall between a first environment and a second environment, **characterized in that** it comprises steps in which:

- over at least two successive time periods $D_k$ corresponding to distinct heating powers $P_k$ of the first environment, respectively to distinct temperatures applied in the first environment, there is undertaken a campaign of measurements of the heat flow rate through the wall $q_k$ and of the temperature in the first environment $T_{1k}$, respectively of the power in the first environment, at closely spaced time intervals, as well as the determination of the temperature in the second environment $T_{2k}$ at closely spaced time intervals;
- the value of the quantity representative of the thermal resistance ($U$, $R_T$, $R$) of the wall is determined by bringing into convergence:

  ◦ on the one hand, a thermal model expressing the temporal variation of the temperature, respectively the temporal variation of the power, in one environment divided off from another environment by a wall, as a function of the heat flow rate through the wall, of the temperature in the other environment and of physical parameters of the wall, on the basis of which the quantity representative of the thermal resistance of the wall is calculable, and

○ on the other hand, the measured evolution of the temperature $T_{1k}(t)$, respectively of the power, in the first environment as a function of time.

2. Method according to Claim 1, **characterized in that** it is implemented with two successive time periods $D_1$ and $D_2$ corresponding to two distinct heating power settings $P_1$ and $P_2$ of the first environment, respectively to two distinct temperature settings applied in the first environment.

3. Method according to any one of the preceding claims, **characterized in that** the measurements of the heat flow rate through the wall $q_k$ are performed with the aid of at least one heat flow sensor positioned on a face of the wall.

4. Method according to Claim 3, **characterized in that** the measurements of the temperature in the first environment $T_{1k}$ are performed with the aid of at least one temperature sensor positioned in the first environment in the vicinity of the heat flow sensor.

5. Method according to any one of the preceding claims, **characterized in that** the measurements of the temperature in the first environment $T_{1k}$ are performed with the aid of at least one ambient temperature sensor positioned in the air volume in the first environment.

6. Method according to any one of the preceding claims, **characterized in that** the measurements of the temperature in the first environment $T_{1k}$ are performed with the aid of at least one surface temperature sensor positioned on or facing the surface of the wall in the first environment.

7. Method according to any one of the preceding claims, **characterized in that** the thermal model is an R-C model with one resistor and one capacitor.

8. Method according to any one of the preceding claims, **characterized in that** it comprises steps in which:

   - there is undertaken, over two successive time periods $D_1$ and $D_2$:

     i. over the first time period $D_1$, the application of a first heating power $P_1$ of the first environment, and a campaign of measurements of the heat flow rate through the wall $q_1$ and of the temperature in the first environment $T_{11}$ at closely spaced time intervals, as well as the determination of the temperature in the second environment $T_{21}$ at closely spaced time intervals, the first heating power $P_1$ being such that the

   $$\alpha = 1 - \frac{\Delta T_1(0) K_{ref}}{P_1}$$

   parameter is less than or equal to 0.8, with $\Delta T_1(0) = T_{11}(t = 0) - T_{2m}$, where $t = 0$ is the start point of the first time period $D_1$, $T_{2m}$ is the average temperature in the second environment over all of the time periods $D_1$ and $D_2$, and $K_{ref}$ is a reference value of the heat loss coefficient $K$ of the first environment, and then

     ii. over the second time period $D_2$, the application of a substantially zero second heating power $P_2$ of the first environment, and a campaign of measurements of the heat flow rate through the wall $q_2$ and of the temperature in the first environment $T_{12}$ at closely spaced time intervals, as well as the determination of the temperature in the second environment $T_{22}$ at closely spaced time intervals;

   - the value of the quantity representative of the thermal resistance ($U$, $R_T$, $R$) of the wall is determined by bringing into convergence:

     ○ a thermal model expressing the temporal variation of the temperature in one environment divided off from another environment by a wall, as a function of the heat flow rate through the wall, of the temperature in the other environment and of physical parameters of the wall, on the basis of which the quantity representative of the thermal resistance of the wall is calculable, on the one hand, and
     ○ the measured evolution $T_{1k}(t)$ of the temperature in the first environment as a function of time, on the other hand.

9. Method according to Claim 8, **characterized in that** the first heating power $P_1$ is such that the parameter

$$\alpha = 1 - \frac{\Delta T_1(0) K_{ref}}{P_1}$$ is greater than or equal to 0.25, preferably greater than or equal to 0.3.

10. Method according to Claim 7, **characterized in that**, for each time period $D_k$, there exists a time interval $\Delta t_k$ for which the measured evolution $T_{1k}(t)$ of the temperature in the first environment as a function of time is substantially linear, and **in that** the R-C model and the measured evolution $T_{1k}(t)$ are made to converge in the following manner: for each time period $D_k$, the slope $a_k$ of the tangent to the curve $T_{1k}(t)$ is determined over the time interval $\Delta t_k$, and the value of the quantity representative of the thermal resistance ($R$, $R_T$, $U$) of the wall is determined on the basis of the values of slope $a_k$ and of the values of mean heat flow rate through the wall $q_{km}$ taken over the time period $D_k$ or, preferably, taken over the time interval $\Delta t_k$.

11. Method according to any one of the preceding claims, **characterized in that**, for each time period $D_k$, the heating power $P_k$ of the first environment comprises a heating power $P_{impk}$ imposed by means of a controlled power source.

12. Method according to Claim 11, **characterized in that** the controlled power source is a fixed item of equipment of the first environment.

13. Method according to Claim 11, **characterized in that** the controlled power source is a source brought into the first environment specifically for the implementation of the method.

14. Method for determining the thermal properties of a premises, **characterized in that** the thermal transmittance $U$ of each construction element belonging to the envelope of the premises is determined by the method of any one of Claims 1 to 13, where each construction element is a dividing wall between a first environment which is the interior of the premises and a second environment which is the exterior of the premises, the campaigns of measurements of the heat flow rate through the construction element $q_k$ and of the interior temperature $T_{1k}$ being done for all the construction elements of the envelope over the same time periods $D_k$ corresponding to distinct heating powers $P_k$ of the premises.

15. Method according to Claim 14, **characterized in that** the heat loss coefficient $K$ of the premises is also determined.

16. Method according to Claim 15, **characterized in that** the heat loss coefficient $K$ of the premises is determined in the following manner:

   - there is undertaken, over each of the said time periods $D_k$, a campaign of measurements of at least one temperature inside the premises at closely spaced time intervals and the determination of the temperature of the outside air at closely spaced time intervals;
   - the value of the heat loss coefficient $K$ of the premises is determined by bringing into convergence:

      ∘ a thermal model expressing the temporal variation of the temperature inside a premises as a function of the heating power applied in the premises, of the temperature of the outside air and of physical parameters of the premises, on the basis of which the heat loss coefficient of the premises is calculable, on the one hand, and
      ∘ the measured evolution of the temperature inside the premises as a function of time, on the other hand.

17. Information recording medium, **characterized in that** it comprises instructions for the implementation of all the calculation steps of a method according to any one of the preceding claims when these instructions are executed by an electronic calculation unit.

18. Device for the implementation of a method according to any one of Claims 1 to 16, **characterized in that** it comprises:

   - at least one heating element comprising a controlled power source;
   - at least one heat flow sensor intended to be positioned on a face of the wall so as to measure the heat flow rate through the wall;
   - at least one temperature sensor intended to measure the temperature in the first environment $T_{1k}$ in the vicinity of the heat flow sensor;
   - an electronic calculation unit;

- an information recording medium comprising the temperature in the second environment $T_{2k}$ and instructions, intended to be executed by the electronic calculation unit, for the implementation of all the calculation steps of the method.

**19.** Device according to Claim 18, **characterized in that** the or each heating element heats the air in the first environment.

**20.** Device according to any one of Claims 18 or 19, **characterized in that** the temperature sensor or sensors comprise at least one ambient temperature sensor intended to measure the temperature of the air in the first environment.

**21.** Device according to any one of Claims 18 to 20, **characterized in that** the temperature sensor or sensors comprise at least one surface temperature sensor intended to measure the surface temperature of the wall in the first environment.

**22.** Device according to any one of Claims 18 to 21, **characterized in that** the electronic calculation unit comprises means of control of the power source of the or of each heating element.

**23.** Device according to any one of Claims 18 to 22, **characterized in that** it comprises:

- at least one box comprising both a heat flow sensor and a temperature sensor,
- connecting means, especially wireless, between the box and the electronic calculation unit.

**Fig. 1**

**Fig. 4**

**Fig. 2**

**Fig. 3**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011117356 A1
- WO 2012028829 A1